# EUROPÄISCHE PATENTSCHRIFT

(11) **EP 1 102 715 B1**
(45) Veröffentlichungstag und Bekanntmachung des Hinweises auf die Patenterteilung: **15.10.2003**
(21) Anmeldenummer: 99929204.8
(22) Anmeldetag: 14.06.1999
(51) Int. Cl.: B65G 17/12, B65G 17/42, F16G 11/12

(54) **STETIG WIRKENDES SEILFÖRDERMITTEL FÜR DIE STEILE UND VORZUGSWEISE VERTIKALE FÖRDERUNG VON SCHÜTTGÜTERN UND FLIESSENDEN MEDIEN BEI GROSSEN FÖRDERHÖHEN**
CONTINUOUS CABLE CONVEYOR FOR STEEP AND SUBSTANTIALLY VERTICAL UP-AND-DOWN TRANSPORT OF BULK AND FLUID MATERIALS, AT GREAT TRANSPORT HEIGHTS
TRANSPORTEUR CONTINU A TRACTION PAR CABLE POUR LE TRANSPORT EN PENTE ET DE PREFERENCE VERTICAL DE MATIERES EN VRAC ET DE SUBSTANCES COULANTES, A DES HAUTEURS DE TRANSPORT IMPORTANTES

(30) Priorität: 03.08.1998 DE 19835000
(43) Veröffentlichungstag der Anmeldung: 30.05.2001
(73) Patentinhaber: Metso Minerals ( Moers) GmbH, 47441 Moers (DE)
(72) Erfinder: LUDWIG, Manfred, D-47441 Moers (DE); GÜNTHER, Roland, D-48161 Münster (DE); PAELKE, Jürgen, W., D-21255 Tostedt (DE)
(74) Vertreter: Rupprecht, Kay, Dipl.-Ing.
(86) Internationale Anmeldenummer: EP9904093
(87) Internationale Veröffentlichungsnummer: WO00007908

(56) Entgegenhaltungen:
- EP-A- 0 020 148
- DE-A- 3 142 572
- DE-A- 19 623 143
- DE-A- 19 702 661
- DE-C- 638 986
- US-A- 3 338 379
- US-A- 4 227 609

## Beschreibung

Die Erfindung betrifft ein stetig wirkendes Seilfördermittel für die steile und vorzugsweise vertikale Auf- oder Abwärtsförderung vorzugsweise von Schüttgütern und fließenden Medien bis zu extremen Förderhöhen von ca. 1.000 m. Die Fördergutaufgabe kann dabei durch direktes Einfüllen auf der Außenseite des Förderstrangs erfolgen. Somit erfolgt dann auch die Fördergutabgabe auf der Außenseite des Förderstrangs in Abhängigkeit von der Fördergeschwindigkeit und den Umlenkradien nach dem Schwerkraft- oder dem Fliehkraftprinzip. Die Fördergutaufgabe kann jedoch auch durch direktes Einfüllen auf der Innenseite des Förderstrangs erfolgen. Die Fördergutabgabe erfolgt dann notwendigerweise ebenfalls auf der Innenseite des Förderstrangs nach dem Schwerkraftprinzip.

Die Einsatzbereiche derartiger Fördermittel sind vielfältig und von wachsender Bedeutung, da weltweit die bergmännische Gewinnung mineralischer Rohstoffe aus Tagebauen und Tiefbauen unterschiedlicher Teufen zunimmt. Auch aus den Gebieten wie z. B. Kavernenbau oder Bau untertägiger Verkehrswege resultieren Aufgabenstellungen, die steile bis vertikale Schüttgutförderungen auch aus größeren Teufen betreffen. Andererseits ist eine wachsende Bedeutung der Abwärtsförderung zu verzeichnen, wenn es z. B. darum geht, diverse Abfallstoffe in Form von Schüttgütern in untertägigen bergmännischen Hohlräumen oder Kavernen der Endlagerung zuzuführen.

Die stetige Förderung von Schüttgutströmen ab ca. 50 m3/h gilt bereits ab Förderhöhen von ca. 40 m gegenüber der unstetigen Förderung bei Tiefbaumaßnahmen als wirtschaftlich überlegen, so daß der einschlägige Stand der Technik bis zu einem Förderhöhenbereich von ca. 120 m durch das Vorhandensein diverser Fördermittel gekennzeichnet ist. Dazu gehören die sogenannten Becherwerke in vielfältigen Ausführungsformen, wobei die Eigenmasse des endlos umlaufenden Förderstrangs und dessen Festigkeit eine maximale Förderhöhe markieren. Derzeit sind bei Becherwerken mit einem Stahlseilgurt als Zugorgane maximale Förderhöhen von ca. 120 m ausgeführt, wobei insbesondere die zulässige Festigkeit der Endlosverbindung des Stahlseilgurtes die Förderhöhe begrenzt.

Eine vom Stahlseilgurt-Becherwerk abgeleitete Ausführung stellt das System *POCKETLIFT* ® dar, bei dem der Förderstrang aus zwei endlos geschlossenen Stahlseilgurten als Zugorgane gebildet wird, zwischen denen die Tragorgane in Abständen befestigt sind. Die derzeitig erreichte maximale Förderhöhe bei diesem System beträgt ca. 200 m ( siehe: PAELKE, J. W.: "Progress with Continuous Steep Angle and Vertical Conveying", bulk solids handling, Volume 16, Number 1 January/March 1996).

Eine weitere Steigerung der Förderhöhe ist bei diesem System nur möglich, wenn die Festigkeit der Gurte und deren Breite erhöht wird. Diese Maßnahmen gehen allerdings mit einer Erhöhung der Eigenmasse dieser Zugträger -einher, so daß der Erfolg nur ein eingeschränkter sein kann und die Problematik der Endlosverbindung dieser Zugträger ebenfalls zunimmt. Unter Berücksichtigung technischer und wirtschaftlicher Kriterien- wird die maximale Hubhöhe bei der Förderung relevanter Fördergutströme beim System *POCKETLIFT* ® bei ca. 300 m begrenzt bleiben müssen.

Bei der Verwendung von Seilen als Zugorgane für endlos geschlossene Förderstränge können grundsätzlich weit darüber hinausgehende Steigerungen der Förderhöhe gesehen werden, wobei insbesondere Seile aus Hochfestfasern besonders hohe Festigkeitswerte bei niedrigen Eigenmassen aufweisen. Zudem erlauben es nur diese Seile, daß mittels spezieller Seilklemmverbindungen Tragorgane befestigt werden können (siehe *DE-PS 19702661*). In der *DE-PS 3142572* ist weiterhin eine Vorrichtung zum lösbaren Verbinden von Seilenden, insbesondere von Seilen bei umlaufenden Seiltrieben in Seilförderern beschrieben, die zumindest wie die zuvor zitierten Seilklemmverbindungen bei gleichsinnigen Umlenkungen innerhalb eines Seilfördermittels mit endlos geschlossenem Förderstrang geeignet ist.

Ein derartiges Seilfördermittel ist im *Glückauf-Forschungsheft 52 (1991) Nr. 3, S. 95-98, sowie in Hebezeuge und Fördermittel, Berlin 37 (1997) 12, S. 533-536,* beschrieben.

In beiden Veröffentlichungen ist die Erkenntnis beschrieben, daß bei derartigen Seilfördermitteln allein Seile aus Hochfestfasern, speziell aus Aramiden, als Zugorgane geeignet' sind. Die zugehörigen Seilklemmverbindungnen und die lösbaren Endlosverbindungen sind dabei so gestaltet, daß Seilscheiben für den Antrieb, die Umkehre und diverse Ablenkungen problemlos, d.h. ohne nachteilige Polygoneffekte, passiert werden können.

In der *US-PS 4,227,609* ist ein Seilbecherförderer beschrieben, bei dem Seile als seitlich angeordnete Zugorgane eingesetzt sind. Die Tragorgane sind in Abständen zwischen diesen Seilen an deren Abbiegungen angeklemmt. Die Umlenkungen des Förderstrangs sind nur in einem Biegesinn möglich.

Ebenso ist in der *DE-OS 3641964* ein Fördermittel für die stetige Vertikalförderung von Schüttgütern bei großen Förderhöhenunterschieden mit Seilen aus Hochfestfasern als Zugorgane beschrieben, das Umlenkungen des Förderstrangs in nur einem Biegesinn zuläßt.

Zudem ist hierin mit Blick auf die lösbare Endlosverbindung der Zugträger deren Anzahl auf nur wenige Seile pro Seite begrenzt, was einer Maximierung der Förderhöhe entgegensteht.

In der *DE-PS 638986* ist ein endloser Förderer mit an den aus Seilen gebildeten Antriebsgliedern befestigten Mitnehmern, wie Platten, Behälter oder dergleichen beschrieben, der mit Blick auf eine Maximierung der Förderhöhe und der damit einhergehenden Festigkeitswerte in den Zugorganen nicht für den angestrebten Förderhöhenbereich bis ca. 1.000 m ausgeführt werden kann.

Die teils kraft- und teils formschlüssige Übertragung der Umfangskräfte auf der Treibscheibe läßt auch bei geringen Förderhöhen und -geschwindigkeiten keine technische Realisierung erwarten.

Diese Beurteilung gilt auch für die in der *US-PS 3338379* beschriebene Variante eines Conveyors.

Die *Europäische Patentanmeldung 0020148* beschreibt Improvements relating to bucket type elevators and conveyors, die einen wechselseitigen Biegesinn eines Förderstrangs mit aus seitlich angeordneten Seilen als Zugorganen ermöglichen, jedoch sind hierbei die Umlenkungen nur mit Seilscheiben möglich, die entsprechende Aussparungen für die Befestigungsstellen der Tragorgane und der Endlosverbindung aufweisen. Auch hierbei erlaubt die vorgesehene formschlüssige Übertragung der Umfangkraft nur Anwendungen für untergeordnete Einsatzfälle, also bei geringen Förderhöhen und damit geringen Festigkeitswerten in den Zugorganen, deren Anzahl aus baulichen Gründen stark begrenzt bleiben muß.

In der *DE-OS 19623143* ist ein Fördermittel für die stetige Schräg- und Vertikalförderung von Schüttgütern und Schlämmen auf extreme Förderhöhen mit Fördergutaufnahme vorrangig nach dem Schöpfprinzip beschrieben, wobei die Zugorgane aus Seilen aus Hochfestfasern gebildet sind und an denen in Abständen die Tragorgane mittels Klemmverbindungen so befestigt sind, daß Umlenkungen des Förderstrangs nur in einem Biegesinn möglich sind.

Ein derartig gestalteter Förderstrang, der mit wenigstens einer lösbaren Endlosverbindung versehen ist, erlaubt grundsätzlich die Realisierung von Förderhöhen in dem angestrebten Bereich, jedoch müssen mit Blick auf die dann ebenfalls erwünschten höheren Förderströme die Erwartungen reduziert werden. Die ordnungsgemäße Beschickung nach dem Schöpfprinzip erlaubt nur geringe Fördergeschwindigkeiten und schränkt die Anzahl der förderfähigen Materialien ein. Erhöhte Schöpfwiderstände stellen zudem eine weitere Einschränkung der förderfähigen Materialien dar und die Beanspruchungen an den Verbindungsstellen zwischen den Zug- und Tragorganen beeinträchtigen die Betriebssicherheit erheblich.

Der Stand der Technik ist also bereits durch Seilfördermittel gekennzeichnet, jedoch wird mit keiner dieser Varianten das erfindungsgemäß angestrebte Ziel, nämlich das Vordringen im Förderhöhenbereich weit oberhalb von 150 m bei Förderung üblicher Massenströme erreicht werden. Lediglich das in der *DE-OS 196 23 143* beschriebene Fördermittel erlaubt annähernd die angestrebte Förderhöhe.

Die Förderung eines üblichen Massenstromes ist dabei jedoch stark begrenzt, da dieses nur mit relativ hohen Fördergeschwindigkeiten einher gehen kann. Die dort zu erwartenden Schöpfwiderstände und die keinesfalls ordnungsgemäße Beschickung der Tragorgane schränken den Einsatz erheblich ein.

Zur Vermeidung dieser Nachteile wird erfindungsgemäß ein stetig wirkendes Seilfördermittel für die steile und vorzugsweise vertikale Auf- oder Abwärtsförderung von Schüttgütern und fließenden Medien bis zu extremen Förderhöhen von ca. 1.000 m vorgeschlagen, bei welchem einerseits ein hohe Fördergeschwindigkeiten ermöglichendes und ein kraftschlüssig wirkendes Antriebssystem vorgesehen und bei welchem andererseits Abbiegungen des Förderstrangs auch im gegenläufigen Biegesinn möglich sind. Besonders durch das letztgenannte Merkmal ist eine direkte Beschickung der Tragorgane z.B. nach dem Prinzip der Außenförderung möglich. Die Entleerung der Tragorgane kann je nach Fördergeschwindigkeit und den Umlenkradien des Förderstrangs nach dem Schwerkraft- oder dem Fliehkraftprinzip erfolgen.

Die Bewegungswiderstände infolge Fördergutaufgabe bleiben reduziert, was ebenfalls die Grenzbeanspruchung des Förderstrangs reduziert.

Diese Merkmale des erfindungsgemäßen Seilfördermittels werden durch spezielle gestalterische Maßnahmen der Klemmverbindungen zwischen den Zug- und den Tragorganen sowie der Endlosverbindungen erreicht.

Diese Endlosverbindungen sind zudem lösbar und ermöglichen den Ausgleich unterschiedlicher Fertigungslängen der Zugorgane.

Die Tatsache, daß die Seil-Endlosverbindungen als lösbare Verbindungen gestaltet sind, erlaubt gegebenenfalls partielle Verlängerungen und Verkürzungen des Förderstrangs und insbesondere eine vereinfachte Montage des Förderstrangs.

Ein Ausführungsbeispiel des erfindungsgemäßen Seilfördermittels ist in der Zeichnung dargestellt und nachfolgend beschrieben.

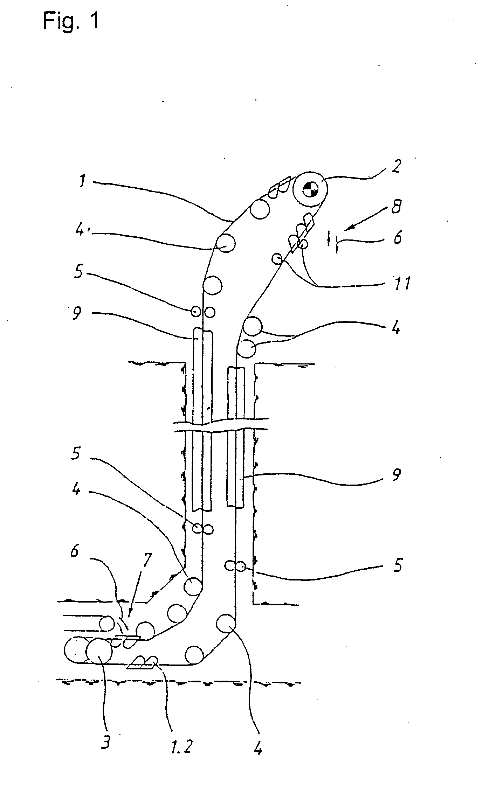

Fig. 1 zeigt eine Linienführung des erfindungsgemäßen Seilfördermittels für die vertikale Aufwärtsförderung eines Fördergutstromes. Das Fördergut (6) gelangt über eine Aufgabestation (7) durch direkte Beschickung in die Tragorgane (1.2) des Förderstrangs (1), in welchen es nach dem Prinzip der Außenförderung zur Fördergut-Abgabestation (8) transportiert wird. Der Förderstrang (1) passiert dabei im konkaven Biegesinn eine oder mehrere Umlenk- bzw. Ablenk-Seilscheiben (4) und Führungs-Seilscheiben (5), bevor im konvexen Biegesinn über weitere Ablenk-Seilscheiben (4) der Förderstrang (1) der Antriebs-Seilscheibe (2) zugeführt wird. Dort erfolgt im Bereich der Fördergut-Abgabestation (8) die Abgabe des Fördergutes (6) je nach Fördergeschwindigkeit und Umlenkradien des Förderstranges (1) nach dem Schwerkraft- oder Fliehkraftprinzip.

Der Förderstrang (1) wird im folgenden über eine oder mehrere Umlenk- bzw. Ablenk-Seilscheiben (4) im konkaven Biegesinn abgebogen, um dann nach dem Passieren weiterer Führungs-Seilscheiben (5) wiederum im konvexen- Biegesinn abgelenkt zu werden. Im weiteren passiert der Förderstrang (1) eine Umkehr-Seilscheibe bzw. Spann-Seilscheibe (3), um dann erneut zur Fördergut-Aufgabestation (7) zu gelangen.

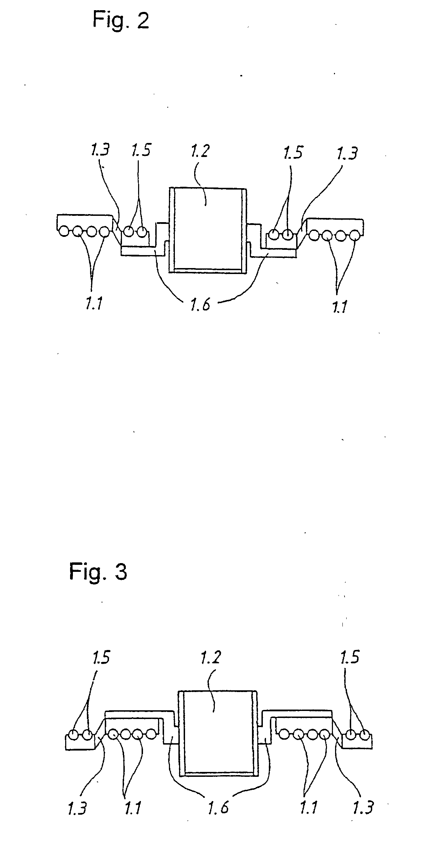

In Fig. 2 ist ein Förderstrang (1) im Querschnitt dargestellt. Es ist zu erkennen, daß das Tragorgan (1.2) mittig angeordnet ist und daß die Zugorgane (1.1) symmetrisch auf den Außenseiten vorgesehen sind. Zwischen diesen Zugorganen (1.1) und den Tragorganen (1.2) sind jeweils Führungsseile (1.5) angeordnet, die bei Biegungen des Förderstrangs (1) im konkaven Biegesinn um die hier nicht dargestellten Ablenk-Seilscheiben (4) laufen.

Die Zugorgane (1.1) und die Führungsseile (1.5) werden in Abständen von den Seilklemmverbindungen (1.3) zu einem Seilstrang vereinigt. Die Tragorgane (1.2) sind mittels beiderseitiger Halter (1.6) an den Seilklemmverbindungen (1.3) angeschlossen. Die lösbaren Seil-Endlosverbindungen (1.4) für die Zugorgane (1.1) sowie für die Führungsseile (1.5) befinden sich in größeren Abständen jeweils anstelle einer Seilklemmverbindung (1.3).

Auch an einer Seil-Endlosverbindung (1.4) sind über Kalter (1.6) jeweils ein Tragorgan (1.2) befestigt.

In Fig. 3 ist ebenfalls ein Förderstrang (1) im Querschnitt dargestellt. Im Gegensatz zur Version gemäß Fig. 2 sind hier die Anordnungen der Zugorgane (1.1) sowie der Führungsseile (1.5) vertauscht unter Beibehaltung der mittigen Anordnung der Tragorgane (1.2).

Fig. 4 zeigt ebenfalls einen Förderstrang (1) in einer Querschnittdarstellung.

Im Gegensatz zu den Darstellungen gemäß Fig. 2 und 3 sind die Zugorgane (1.1) zu nur einem Seilstrang vereinigt. Die kraftschlüssige Übertragung der Umfangskraft in den Seilstrang kann hier über nur eine Seiltrommel mit entsprechend vielen Seilrillen erfolgen, die lediglich einen Konstantantrieb mit einem oder zwei Antriebssätzen erfordert. Bei den Varianten gemäß der Darstellungen in den Fig. 2 und 3 muß antriebsseitig sichergestellt sein, daß die Antriebs-Seilscheiben (2) jeweils gleiche Umfangsgeschwindigkeiten aufweisen. Dies kann z. B. dadurch sichergestellt werden, daß eine Antriebs-Seilscheibe mit einem Konstantantrieb versehen wird und die andere zusätzlich mit einem Überlagerungsantrieb, so daß über eine Regelung vor- oder nacheilende Umfangsgeschwindigkeiten zur Anpassung an die Umfangsgeschwindigkeit der anderen Antriebs-Seilscheibe (2) ermöglicht werden.

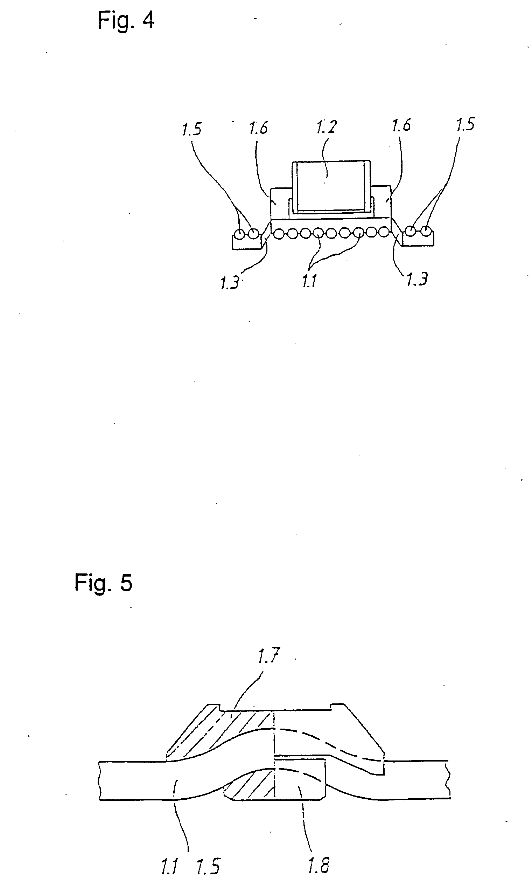

In Fig. 5 ist eine Seilklemmverbindung (1.3) in Zweiseil-Ausführung dargestellt. Diese Klemmverbindung (1.3) kann für mehrere Seile und als gemeinsames Bauteil für Zugorgane (1.1) und Führungsseile (1.5) gestaltet sein. Der Klemmbereich für die Führungsseile (1.5) ist grundsätzlich, bezogen auf den Klemmbereich der Zugorgane (1.1), um 180° gedreht angeordnet. Die neutrale Faser der Zugorgane (1.1) ist dabei identisch mit der neutralen Faser der Führungsseile (1.5). Die Seilklemmverbindung (1.3) besteht aus einem Oberteil (1.7) und einem Unterteil (1.8), die beide durch Schrauben verbunden sind. Je nach Anzahl der zu verbindenden Seile können die Seilklemmverbindungen (1.3) entsprechend gestaltet sein, wobei einem Oberteil (1.7) auch mehrere Unterteile (1.8) zugeordnet sein können. So kann z. B. ein Oberteil für 6 Seile jeweils mit 3 Unterteilen für 2 Seile verbunden sein.

Die Oberteile (1.7) sind so gestaltet, daß Halter (1.6) für die Tragorgane (1.2) über Schraubverbindungen daran befestigt werden können.

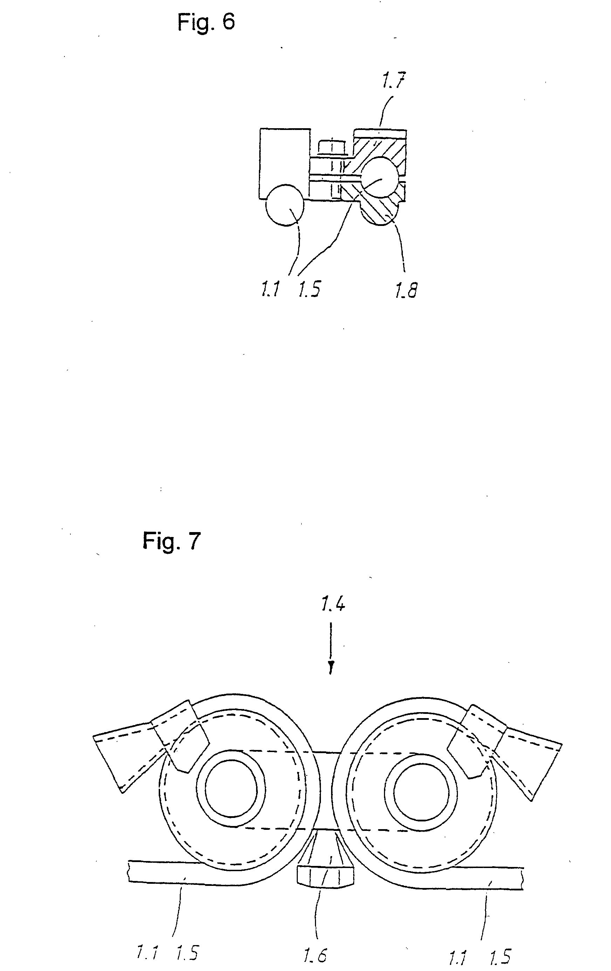

Fig. 6 zeigt eine Seilklemmverbindung (1.3) gemäß Fig. 5 in einer Teilschnitt-Darstellung.

Fig. 7 zeigt eine lösbare Seil-Endlosverbindung (1.4) wie sie sowohl für die Zugorgane (1.1) als auch für die Führungsseile (1.5) eingesetzt werden kann. In modularer Bauweise ist diese Seil-Endlosverbindung (1.4) für mehrere Seile in paralleler Anordnung einsetzbar.

Sinngemäß wie bei Seilklemmverbindungen (1.3) ist hier der Verbindungsbereich für Führungsseile (1.5) bezogen auf den Verbindungsbereich für die Zugorgane (1.1) um 180 ° gedreht angeordnet. Auch hierbei ist bei konkaven und konvexen Biegungen des Förderstrangs(1) um diverse Seilscheiben die ' Lage der neutralen Faser sowohl für die Zugorgane (1.1) und für die Führungsseile (1.5) identisch. Weiterhin ist die lösbare Seil-Endlosverbindung (1.4) mit einem Halter (1.6) für den Anschluß eines Tragorganes (1.2) versehen.

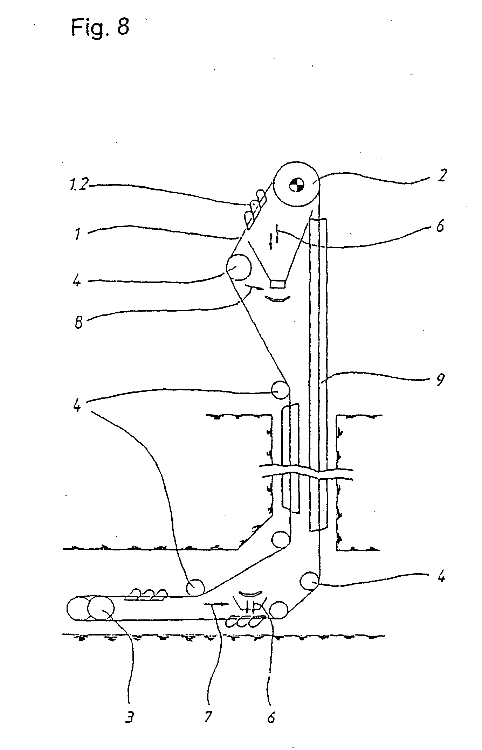

Fig. 8 zeigt in Analogie zu Fig. 1 ein erfindungsgemäßes Seilfördermittel für die Innenförderung.

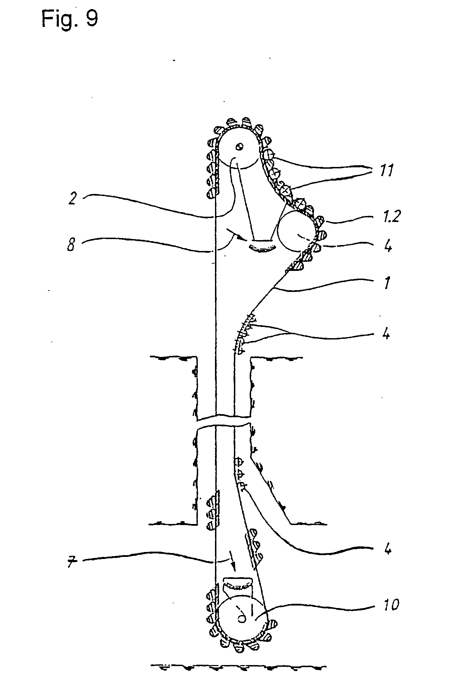

Fig. 9 zeigt in Analogie zu Fig. 1 und zu Fig. 8 ebenfalls ein erfindungsgemäßes Seilfördermittel für die Innenförderung, wobei die untere Umlenkung des Förderstrangs (1) um eine Füll-Seiltrommel (10) erfolgt und im Bereich der Fördergut-Abgabestation (8) der Förderstrang (1) durch Seilrollen (11) während der Bewegung ein- oder wechselseitig leicht deformiert wird, um den Entleervorgang aus den aus flexiblen Materialien hergestellten Tragorganen (1.2) zu begünstigen.

### (Hierzu 3 Blatt Zeichnung)

### Bezugszeichenliste

- 1.: Förderstrang
- 1.1: Zugorgan
- 1.2: Tragorgan
- 1.3: Seilklemmverbindung
- 1.4: Seil-Endlosverbindung
- 1.5: Führungsseile
- 1.6: Halter
- 1.7: Seilklemmverbindung; Oberteil
- 1.8: Seilklemmverbindung; Unterteil
- 2.: Antriebs-Seilscheibe
- 3.: Umkehr-Seilscheibe bzw. Spann-Seilscheibe
- 4.: Umlenk- bzw. Ablenk-Seilscheibe
- 5.: Führungs-Seilscheibe
- 6.: Fördergut
- 7.: Fördergut-Aufgabestation
- 8.: Fördergut-Abgabestation
- 9.: Führungsgehäuse
- 10.: Füll-Seiltrommel
- 11.: Seilrolle

## Patentansprüche

1. Stetig wirkendes Seilfördermittel für die steile und vorzugsweise vertikale Auf- oder Abwärtsförderung von Schüttgütern und fließenden Medien bei großen Förderhöhen mit parallel angeordneten Seilen aus Hochfestfasern als Zugorgane (1.1), die in Abständen mit Seilklemmverbindungen (1.3) zu einem Seilstrang vereinigt sind und der eine oder mehrere Seil-Endlosverbindungen (1.4) für die entsprechende Anzahl der vorgesehenen Seile als Zugorgane (1.1) aufweist, wobei an den Seilklemmverbindungen (1.3) und auch an den Seil-Endlosverbindungen (1.4) Tragorgane (1.2) zur Aufnahme des Fördergutes (6) befestigt sind, **dadurch gekennzeichnet,daß** die Seilklemmverbindungen (1.3) und die Seil-Endlosverbindungen (1.4) jeweils neben dem Klemmbereich bzw. dem Endlosverbindungsbereich für die Zugorgane (1.1) einen weiteren um 180° gedreht angeordneten Klemmbereich bzw. Endlosverbindungsbereich für zusätzliche Führungsseile (1.5) aufweisen, wobei die so erweiterten Seilklemmverbindungen (1.3) jeweils mit einem Halter (1.6) versehen sind und insgesamt einen endlos geschlossenen Förderstrang (1) bilden, welcher Linienführungen mit konvexen und konkaven Umlenkungen passieren kann und der Antrieb des gesamten Förderstrangs (1), welcher grundsätzlich für das Prinzip der Innenförderung wie auch für das Prinzip der Außenförderung gestaltet sein kann, kraftschlüssig nach dem Hülltriebprinzip erfolgt.

2. Stetig wirkendes Seilfördermittel gemäß Anspruch 1, **dadurch gekennzeichnet, daß** die zum Förderstrang (1) gehörenden Führungsseile (1.5) wahlweise auf den Außenseiten des Förderstrangs (1) oder innerhalb des Förderstrangs (1) zwischen den Tragorganen (1.2) und den Zugorganen (1.1) angeordnet sind.

3. Stetig wirkendes Seilfördermittel gemäß der Ansprüche 1 und 2, **dadurch gekennzeichnet, daß** die Zugorgane (1.1) und die Führungsseile (1.5) durch Verwendung von Seilklemmverbindungen (1.3) mit einem Seilklemmverbindung-Oberteil (1.7) und mehreren zugehörigen Seilklemmverbindung-Unterteilen (1.8) auch einzeln ausgetauscht werden können, und ebenso auch die Seil-Endlosverbindungen (1.4) durch modulare Bauweise den Austausch einzelner Zugorgane (1.1) und Führungsseile (1.5) erlauben.

4. Stetig wirkendes Seilfördermittel gemäß der Ansprüche 1 bis 3, **dadurch gekennzeichnet, daß** der Förderstrang (1) in transportablen Teillängen durch Verwendung lösbarer Seil-Endlosverbindungen (1.4) montierbar, demontierbar und gegebenenfalls erweiterbar oder verkürzbar ist.

5. Stetig wirkendes Seilfördermittel gemäß der Ansprüche 1 bis 4, **dadurch gekennzeichnet, daß** die Tragorgane (1.2) aus einzelnen Pockets bestehen, die untereinander befestigt werden und so in dichter Folge eine verlustarme Förderung ermöglichen.

6. Stetig wirkendes Seilfördermittel gemäß der Ansprüche 1 bis 5, **dadurch gekennzeichnet, daß** ausgewählte Tragorgane (1.2) mit Reinigern ausgestattet sind, um etwaige Materialablagerungen innerhalb des Führungsgehäuses (9) während des Fördervorganges zu entfernen.

7. Stetig wirkendes Seilfördermittel gemäß der Ansprüche 1 bis 6, **dadurch gekennzeichnet, daß** der Förderstrang (1) durch entsprechend angeordnete Führungs-Seilscheiben (5) vorzugsweise im vertikalen Bereich um seine Längsachse bis zu 180 ° verdreht wird, so daß die Fördergut-Abgabestation (8) bezogen auf die Fördergut-Aufgabestation (7) in jedem beliebigen Winkel angeordnet werden kann.

8. Stetig wirkendes Seilfördermittel gemäß der Ansprüche 1 bis 7, **dadurch gekennzeichnet, daß** die Seil-Endlosverbindung nicht als kompaktes Bauteil für sämtliche Zugorgane (1.1) und Führungsseile (1.5) hergestellt ist, sondern entsprechend der Anzahl der Zugorgane (1.1) und der Führungsseile (1.5) in Einzelbauweise versetzt angeordnet ist, so daß größere Umwuchtmassen vermieden werden, die einzelnen Seil-Endlosverbindungen aber dennoch mit einem Halter (1.6) zur Aufnahme der Tragorgane (1.2) versehen sind.

9. Stetig wirkendes Seilfördermittel gemäß der Ansprüche 1 bis 8, **dadurch gekennzeichnet, daß** Seilrollen (11) den Förderstrang (1) einseitig oder wechselseitig gering deformieren, so daß die aus flexiblen Materialien bestehenden Tragorgane (1.2) infolge der einseitigen oder wechselnden Walkbewegungen die einzelnen Entleerungsvorgänge begünstigen.

10. Stetig wirkendes Seilfördermittel gemäß der Ansprüche 1 bis 9, **dadurch gekennzeichnet, daß** bei der Innenförderung die untere Umlenkung des Förderstrangs (1) um eine Füll-Seiltrommel (10) erfolgt, die bei translatorischer Lagerung gleichzeitig als Spannstation fungiert.

## Claims

1. A continuously acting cable conveyor means for steep and preferably vertical upward and downward transport of bulk and fluid materials at great transport heights, having cables arranged in parallel made of ultrahigh-strength fibers as traction elements (1.1) combined at intervals by means of cable clamp connections (1.3) to a loom of cables comprising one or more cable endlessness connections (1.4) for the required number of cables provided as said traction elements (1.1), with carrying elements (1.2) for receiving the material (6) to be conveyed being attached to said cable clamp connections (1.3) and also to said cable endlessness connections (1.4),
**characterized in that**
said cable clamp connections (1.3) and said cable endlessness connections (1.4) each comprise, adjacent to the clamp area or the endlessness connection area for the traction elements (1.1), a further clamp area or endlessness connection area arranged turned by 180° for additional guide cables (1.5), with the thus extended cable clamp connections (1.3) each being provided with a retainer (1.6) and forming as a whole an endless-loop loom of cables (1), which may pass routes having convex and concave deflections, and the drive of the entire loom of conveyor cables (1), which basically may be designed for the inward conveyance principle, as well as for the outward conveyance principle, taking place in a force-transmitting manner according to the envelope drive principle (planetary gear train principle??).

2. The continuously acting cable conveyor means according to claim 1,
**characterized in that**
said guide cables (1.5) being part of said loom of cables (1) are selectively arranged externally on the loom of conveyor cables (1) or inside of the loom of conveyor cables (1) between said carrying elements (1.2) and said traction elements (1.1).

3. The continuously acting cable conveyor means according to claims 1 and 2,
**characterized in that**
said traction organs (1.1) und said guide cables (1.5), by using cable clamp connections (1.3) having a cable clamp connection upper part (1.7) and several matching cable clamp connection lower parts (1.8), can also be replaced individually, and said cable endlessness connections (1.4) can likewise permit the replacement of individual traction elements (1.1) and guide cables (1.5) due to a modular construction.

4. The continuously acting cable conveyor means according to claims 1 through 3,
**characterized in that**
said loom of conveyor cables (1) in transportable partial lengths may be assembled, disassembled and, if necessary, extended or shortened by using detachable cable endlessness connections (1.4).

5. The continuously acting cable conveyor means according to claims 1 through 4,
**characterized in that**
said carrying elements (1.2) are comprised of single pockets that can be connected up to each other and thus enable, in a close succession, a low-loss conveyance.

6. The continuously acting cable conveyor means according to claims 1 through 5,
**characterized in that**
selected carrying elements (1.2) are provided with cleaning means so as to remove any material deposits within the housing of the guide means (9) during the conveyance process.

7. The continuously acting cable conveyor means according to claims 1 through 6,
**characterized in that**
said loom of conveyor cables (1) is twisted about its longitudinal axis, preferably in the vertical area, by up to 180° by correspondingly arranged guiding headgear sheaves (5), so that the materials delivery station (8) may be arranged at any desired angle relative to the materials feeder station (7).

8. The continuously acting cable conveyor means according to claims 1 through 7,
**characterized in that**
said cable endlessness connection is not made as a compact component for all of the traction elements (1.1) and guide cables (1.5), rather it is arranged offset as a separate unit so as to avoid unbalanced mass, but the individual cable endlessness connections are nevertheless provided with a retainer (1.6) for receiving the carrying elements (1.2).

9. The continuously acting cable conveyor means according to claims 1 through 8,
**characterized in that**
cable pulleys (11) slightly deform the loom of conveyor cables (1) on one side or on alternate sides so that the carrying elements (1.2) made of flexible materials, as a result of the unilateral or alternate milling movements, facilitate the separate emptying processes.

10. The continuously acting cable conveyor means according to claims 1 through 9,
**characterized in that**
during the inward conveyance, the lower deflection of the loom of conveyor cables (1) takes place about a feeding cable drum (10) that, in the case of translational bearing also operates as a tensioning station.

## Revendications

1. Transporteur continu à traction par câble pour le transport montant ou descendant en forte pente et de préférence vertical de matières en vrac et de substances capables de s'écouler, à des hauteurs de transport importantes, comportant à titre d'organes de traction (1.1) des câbles agencés parallèlement et constitués de fibres hautement résistantes qui sont réunis à des intervalles au moyen de jonctions de serrage de câble (1.3) pour former un brin de câble qui comprend une ou plusieurs jonctions sans fin de câble (1.4) pour le nombre correspondant des câbles prévus à titre d'organes de traction (1.1), des organes porteurs (1.2) pour recevoir la matière en vrac à transporter (6) étant fixés sur les jonctions de serrage de câble (1.3) et également sur les jonctions sans fin de câble (1.4), **caractérisé en ce que** les jonctions de serrage de câble (1.3) et les jonctions sans fin de câble (1.4) comprennent chacune, à côté de la zone de serrage ou de la zone de jonction sans fin destinée aux organes de traction (1.1), une autre zone de serrage ou zone de jonction sans fin tournée de 180° et destinée à des câbles de guidage supplémentaires (1.5), les jonctions de serrage de câble (1.3) ainsi élargies étant pourvues chacune d'un élément de retenue (1.6) et formant dans l'ensemble un brin de transport fermé sans fin (1) qui peut passer des guidages de ligne présentant des renvois convexes et concaves, et l'entraînement de l'ensemble du brin de transport (1) qui peut fondamentalement être réalisé pour le principe du transport interne et également pour le principe du transport externe, s'effectue par coopération de forces selon le principe de l'entraînement enveloppant.

2. Transporteur continu à traction par câble selon la revendication 1, **caractérisé en ce que** les câbles de guidage (1.5) faisant partie du brin de transport (1) sont agencés au choix sur les côtés extérieurs du brin de transport (1) ou à l'intérieur du brin de transport (1) entre les organes porteurs (1.2) et les organes de traction (1.1).

3. Transporteur continu à traction par câble selon les revendications 1 et 2, **caractérisé en ce que** les organes de traction (1.1) et les câbles de guidage (1.5) peuvent également être remplacés individuellement par utilisation de jonctions de serrage de câble (1.3) comportant une partie supérieure (1.7) et plusieurs parties inférieures associées (1.8), et également les jonctions sans fin de câble (1.4) permettent, grâce à un mode de construction modulaire, le remplacement d'organes de traction individuels (1.1) et de câbles de guidage individuels (1.5).

4. Transporteur continu à traction par câble selon les revendications 1 à 3, **caractérisé en ce que** le brin de transport (1) peut être monté, démonté et le cas échéant également être allongé ou raccourci à des longueurs partielles transportables par utilisation de jonctions sans fin de câble (1.4) amovibles.

5. Transporteur continu à traction par câble selon les revendications 1 à 4, **caractérisé en ce que** les organes porteurs (1.2) sont constitués par des poches individuelles qui sont fixées les unes aux autres et qui permettent ainsi en succession rapprochée un transport avec peu de pertes.

6. Transporteur continu à traction par câble selon les revendications 1 à 5, **caractérisé en ce que** des organes porteurs choisis (1.2) sont munis d'éléments de nettoyage pour enlever des dépôts de matière éventuels à l'intérieur du boîtier de guidage (9) pendant l'opération de transport.

7. Transporteur continu à traction par câble selon les revendications 1 à 6, **caractérisé en ce que** le brin de transport (1) est tourné de préférence dans la zone verticale autour de son axe longitudinal jusqu'à 180° par des poulies de guidage (5) agencées en correspondance, de sorte que la station de remise de matière à transporter (8) peut être agencée à tout angle quelconque par rapport à la station d'alimentation de matière à transporter (7).

8. Transporteur continu à traction par câble selon les revendications 1 à 7, **caractérisé en ce que** la jonction sans fin de câble n'est pas réalisée sous forme de composant compact pour tous les organes de traction (1.1) et pour tous les câbles de guidage (1.5), mais elle est agencée en décalage en mode structurel individuel en correspondance du nombre des organes de traction (1.1) et des câbles de guidage (1.5), de sorte que l'on évite des masses non équilibrées importantes, mais les jonctions sans fin de câble individuelles sont néanmoins pourvues d'un élément de retenue (1.6) pour recevoir les organes porteurs (1.2).

9. Transporteur continu à traction par câble selon les revendications 1 à 8, **caractérisé en ce que** des poulies (11) font légèrement déformer le brin de transport (1) unilatéralement ou en alternance, de sorte que les organes porteurs (1.2) constitués de matériaux flexibles favorisent les opérations de vidage individuelles en raison des mouvements de foulage unilatéraux ou alternants.

10. Transporteur continu à traction par câble selon les revendications 1 à 9, **caractérisé en ce que** lors du convoyage interne le renvoi inférieur du brin de transport (1) s'effectue autour d'un tambour à câble (10) destiné au remplissage qui fait simultanément office de station de tensionnement en étant monté en translation.
